(19) Europäisches Patentamt / European Patent Office / Office européen des brevets

(11) **EP 3 675 994 B1**

(12) **EUROPÄISCHE PATENTSCHRIFT**

(45) Veröffentlichungstag und Bekanntmachung des Hinweises auf die Patenterteilung:
**06.11.2024 Patentblatt 2024/45**

(21) Anmeldenummer: **18745969.8**

(22) Anmeldetag: **02.08.2018**

(51) Internationale Patentklassifikation (IPC):
***C08J 9/00*** *(2006.01)* ***C09D 175/08*** *(2006.01)*
***C07C 41/01*** *(2006.01)* ***C08J 9/28*** *(2006.01)*
***C08J 9/30*** *(2006.01)*

(52) Gemeinsame Patentklassifikation (CPC):
(C-Sets verfügbar)
**C09D 175/08; C08J 9/0023; C08J 9/0038;**
**C08J 9/30;** C08G 2150/60; C08J 2205/044;
C08J 2375/04; C08L 2201/54 (Forts.)

(86) Internationale Anmeldenummer:
**PCT/EP2018/070948**

(87) Internationale Veröffentlichungsnummer:
**WO 2019/042696 (07.03.2019 Gazette 2019/10)**

(54) **VERWENDUNG VON POLYOLETHERN ZUR HERSTELLUNG PORÖSER KUNSTSTOFFBESCHICHTUNGEN**

USE OF POLYOL ETHERS FOR PRODUCING POROUS PLASTIC COATINGS

UTILISATION D'ÉTHERS DE POLYOLS DESTINÉS À LA FABRICATION DE REVÊTEMENTS PLASTIQUES POREUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.08.2017 EP 17188505**

(43) Veröffentlichungstag der Anmeldung:
**08.07.2020 Patentblatt 2020/28**

(73) Patentinhaber: **Evonik Operations GmbH**
**45128 Essen (DE)**

(72) Erfinder:
- **KLOSTERMANN, Michael**
  **45141 Essen (DE)**
- **VON HOF, Jan Marian**
  **44789 Bochum (DE)**
- **GLOS, Martin**
  **46325 Borken (DE)**
- **EILBRACHT, Christian**
  **44627 Herne (DE)**
- **DAHL, Verena**
  **51429 Bergisch Gladbach (DE)**
- **SPRINGER, Oliver**
  **46485 Wesel (DE)**
- **WENK, Hans Henning**
  **45470 Mülheim an der Ruhr (DE)**

(74) Vertreter: **Evonik Patent Association**
**c/o Evonik Industries AG**
**IP Management**
**Bau 1042A/PB 15**
**Paul-Baumann-Straße 1**
**45772 Marl (DE)**

(56) Entgegenhaltungen:
**EP-A1- 1 514 872** **JP-A- 2011 001 277**
**US-A1- 2006 079 635**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 675 994 B1

(52) Gemeinsame Patentklassifikation (CPC): (Forts.)

C-Sets
**C09D 175/08, C08K 5/06;**
**C09D 175/08, C08K 5/521**

## Beschreibung

Die vorliegende Erfindung liegt auf dem Gebiet der Kunststoffbeschichtungen, Kunstleder und Polyolether.

Sie betrifft insbesondere die Herstellung poröser Polymerbeschichtungen, bevorzugt poröser Polyurethanbeschichtungen unter Verwendung von Polyolethern als Additive.

Mit Kunststoffen beschichtete Textilien, wie z.B. Kunstleder, bestehen in der Regel aus einem textilen Träger, auf welchen eine poröse Polymerschicht laminiert wird, welche wiederum mit einer Deckschicht bzw. einem Decklack überzogen ist.

Die poröse Polymerschicht weist hierbei vorzugsweise Poren im Mikrometer-Bereich auf, ist luftdurchlässig und damit atmungsaktiv, d.h. durchlässig für Wasserdampf, jedoch wasserbeständig. Bei der porösen Polymerschicht handelt es sich oftmals um poröses Polyurethan. Zurzeit erfolgt die Herstellung poröser Polyurethan-Schichten meist durch ein Koagulationsverfahren, in welchem DMF als Lösemittel verwendet wird. Aufgrund von ökologischen Bedenken gerät diese Herstellmethode jedoch vermehrt in die Kritik, sodass sie nach und nach von anderen, umweltfreundlicheren Technologien abgelöst werden sollte. Eine dieser Technologien basiert auf wässrigen Polyurethan-Dispersionen, sogenannten PUDs. Diese bestehen in der Regel aus in Wasser dispergierten Polyurethan-Mikropartikeln, der Festkörpergehalt liegt meist im Bereich von 30 - 60 Gew.-%. Zur Herstellung einer porösen Polyurethan-Schicht werden diese PUDs mechanisch aufgeschäumt, auf einen Träger beschichtet (Schichtdicken typischer Weise zwischen 300 - 2000 μm) und anschließend bei erhöhter Temperatur getrocknet. Während dieses Trocknungsschritts kommt es zu einer Verdampfung des im PUD-System enthaltenen Wassers, wodurch es zu einer Verfilmung der Polyurethan-Partikel kommt. Um die mechanische Festigkeit des Films weiter zu erhöhen können dem PUD-System während des Herstellungsprozesses zusätzlich hydrophile (Poly)Isocyanate zugesetzt werden, welche während des Trocknungsschritts mit freien, an der Oberfläche der Polyurethan-Partikel vorhandenen OH-Resten reagieren können und so zu einer zusätzlichen Vernetzung des PolyurethanFilms führen.

Sowohl die mechanischen als auch die haptischen Eigenschaften so hergestellter PUD-Beschichtungen werden maßgeblich von der Zellstruktur des porösen Polyurethanfilms bestimmt. Weiterhin hat die Zellstruktur des porösen Polyurethanfilms Einfluss auf die Luftdurchlässigkeit bzw. Atmungsaktivität des Materials. Besonders gute Eigenschaften lassen sich hierbei mit möglichst feinen, homogen verteilten Zellen erzielen. Zur Beeinflussung der Zellstruktur während des oben beschrieben Herstellverfahrens ist es üblich dem PUD-System vor bzw. während des mechanischen Aufschäumens Tenside zuzusetzen. Entsprechende Tenside führen zum einen dazu, dass sich während des Aufschäumvorgangs ausreichende Mengen Luft ins PUD-System einschlagen lassen. Zum andern haben die Tenside einen direkten Einfluss auf die Morphologie der so erzeugten Luftblasen. Auch die Stabilität der Luftblasen wird maßgeblich durch die Art des Tensids beeinflusst. Dies ist insbesondere während der Trocknung geschäumter PUD-Beschichtungen wichtig, da sich hierdurch Trocknungsdefekte wie Zellvergröberung oder Trocknungsrisse unterbinden lassen.

Im Stand der Technik werden eine Reihe ionischer und nichtionischer Tenside offenbart, welche zur Herstellung von porösen, PUD-basierten Textil-Verbundmaterialien verwendet werden können. Insbesondere bevorzugt sind hierbei meist anionische Tenside auf Basis von Ammonium-Stearat, siehe z.B. US 2015/0284902 A1 oder US 2006/0079635 A1.

Der Einsatz von Ammonium-Stearat geht jedoch mit vielfältigen Nachteilen einher. Zum einen ist Ammonium-Stearat anfällig gegenüber Kalk-haltigem Wasser. In Polymer-Dispersionen, welche Calcium-Ionen enthalten, können sich hierbei unlösliche Calcium-Seifen bilden, was Ausflockungen bzw. ein Vergelen der Polymerdispersion zur Folge hat. Auf Basis von Ammonium-Stearat hergestelltes Kunstleder hat überdies den Nachteil, dass sich im Kontakt mit Kalk-haltigem Wasser Calcium-Seifen an der Kunstlederoberfläche bilden können, welche als weiße Flecken zu Tage treten. Insbesondere bei dunkel eingefärbtem Leder ist dies unerwünscht. Darüber hinaus weist Ammonium-Stearat den Nachteil auf, dass es im getrockneten Polyurethanfilm eine recht hohe Migrierfähigkeit aufweist. Insbesondere im Kontakt mit Wasser kann hierbei ein als unangenehm empfundener Schmierfilm an der Oberfläche der Kunstlederbeschichtung entstehen. Ein weiterer Nachteil von Ammonium-Stearat ist, dass es in der Regel in Kombination mit anderen Tensiden eingesetzt werden muss, um überhaupt erst eine ausreichende Schaumstabilität erlangen zu können; im Stand der Technik werden hier z.B. Sulfosuccinamate beschrieben. Diese zusätzlichen Komponenten führen in der Anwendung zu einer erhöhten Komplexität.

In der noch unveröffentlichten europäischen Patentanmeldung 16180041.2 wurde bereits die Verwendung von Polyolestern zur Herstellung poröser Kunststoffbeschichtungen, insbesondere poröser Polyurethanbeschichtungen beschrieben. Hier konnte gezeigt werden, dass entsprechende Polyolester ein effizientes Aufschäumen von wässrigen Polymerdispersionen erlauben, ohne die im Stand der Technik aufgeführten Nachteile aufzuweisen. Ein Nachteil dieser Polyolester kann jedoch sein, dass sie in den wässrigen Polymerdispersionen eine nur unzureichende Hydrolysestabilität aufweisen, insbesondere bei hohen pH-Werten. Aufgabe der vorliegenden Erfindung war daher die Bereitstellung einer weiteren Tensidklasse, welche ebenfalls ein effizientes Aufschäumen wässriger Polymerdispersionen erlaubt, sich jedoch zusätzlich durch eine erhöhte Hydrolysestabilität auszeichnet. Überraschender Weise wurde gefunden, dass die Verwendung von Polyolethern die Lösung der genannten Aufgabe ermöglicht.

Gegenstand der vorliegenden Erfindung ist daher die Verwendung von Polyolethern als Additive in wässrigen

Polymer-Dispersionen zur Herstellung poröser Polymerbeschichtungen, bevorzugt zur Herstellung von porösen Polyurethanbeschichtungen.

Die erfindungsgemäß herzustellende poröse Polymerschicht (d.h. die poröse Polymerbeschichtung) weist hierbei vorzugsweise Poren im Mikrometer-Bereich auf, wobei die mittlere Zellgröße vorzugsweise kleiner 150 µm, bevorzugt kleiner 120 µm, insbesondere bevorzugt kleiner 100 µm, ganz besonders bevorzugt kleiner 75 µm ist. Die bevorzugte Schichtdicke liegt im Bereich von 10 - 10000 µm, vorzugsweise von 50 - 5000 µm, weiter bevorzugt von 75 - 3000 µm, insbesondere von 100 - 2500 µm.

Der erfindungsgemäße Einsatz der Polyolether hat überraschenderweise mannigfaltige Vorteile.

Er ermöglicht ein effizientes Aufschäumen der Polymer-Dispersion. Die so hergestellten Schäume zeichnen sich hierbei durch eine außergewöhnlich feine Porenstruktur mit besonders homogener Zellverteilung aus, was sich wiederum sehr vorteilhaft auf die mechanischen und haptischen Eigenschaften der porösen Polymerbeschichtung auswirkt, welche auf Basis dieser Schäume hergestellt wurden. Des Weiteren kann hierdurch die Luftdurchlässigkeit bzw. Atmungsaktivität der Beschichtung verbessert werden.

Ein weiterer Vorteil der erfindungsgemäß einzusetzenden Polyolether ist, dass sie die Herstellung besonders stabiler Schäume ermöglichen. Dies wirkt sich zum einen vorteilhaft auf deren Verarbeitbarkeit aus. Zum andern hat die erhöhte Schaumstabilität den Vorteil, dass sich während der Trocknung entsprechender Schäume Trocknungsdefekte wie Zellvergröberung oder Trocknungsrisse vermeiden lassen. Darüber hinaus erlaubt die verbesserte Schaumstabilität ein schnelleres Trocknen der Schäume, was prozesstechnische Vorteile sowohl aus ökologischer als auch aus ökonomischer Sicht bietet.

Noch ein Vorteil der erfindungsgemäß einzusetzenden Polyolether ist, dass diese im getrockneten Polymerfilm, insbesondere Polyurethanfilm, nicht mehr migrierfähig sind, besonders dann, wenn dem System während der Trocknung noch zusätzliche (hydrophile) (Poly)Isocyanate oder Melamin-basierte Vernetzer zugesetzt werden.

Ein zusätzlicher Vorteil der erfindungsgemäß einzusetzenden Polyolether ist, dass sie zu einem Viskositätsaufbau der geschäumten, nicht-getrockneten Dispersion führen können. Dies wiederum kann sich vorteilhaft auf die Verarbeitbarkeit des Schaums auswirken. Des Weiteren kann hierdurch ggf. auf den Einsatz von zusätzlichen Verdickungsmitteln zur Einstellung der Schaumviskosität verzichtet, bzw. deren Einsatzkonzentration verringert werden, was ökonomische Vorteile mit sich bringt.

Noch ein Vorteil der erfindungsgemäß einzusetzenden Polyolether ist, dass sie wenig bzw. gar nicht anfällig für kalk-haltiges Wasser sind.

Ein weiterer Vorteil der erfindungsgemäß einzusetzenden Polyolether ist, dass sie auch ohne den Einsatz weiterer Tenside zu einer ausreichenden Stabilisierung von Schäumen basierend auf wässrigen Polymerdispersionen führen. Hierdurch kann die Komplexität bei der Zusammenstellung einer geeigneten Schaumformulierung anwenderseitig verringert werden.

Weiterhin ein Vorteil der erfindungsgemäßen Polyolether ist, dass sie sich über einen weiten pH-Bereich durch eine ausgezeichnete Hydrolysestabilität auszeichnen.

Der Begriff der Polyolether umfasst im Sinne der gesamten vorliegenden Erfindung auch deren alkoxylierte Addukte, die durch Umsetzung eines Polyolethers mit Alkylenoxiden wie z.B. Ethylen-, Propylen- und/oder Butylenoxid erhalten werden können.

Der Begriff Polyolether umfasst im Sinne der gesamten vorliegenden Erfindung auch Polyolester-Polyolether-Hybridstrukuren, die durch O-Alkylierung von Polyolestern (zum Begriff Polyolester siehe insbesondere die noch unveröffentlichte europäische Patentanmeldung 16180041.2) oder durch Veresterung von Polyolethern hergestellt werden.

Der Begriff der Polyolether umfasst im Sinne der gesamten vorliegenden Erfindung auch deren ionische Derivate, bevorzugt die phosphorylierten und sulfatierten Derivate, insbesondere phosphorylierten Polyolether. Diese Derivate der Polyolether, insbesondere phosphorylierte Polyolether, sind erfindungsgemäß bevorzugt einsetzbare Polyolether. Sie werden weiter unten noch näher beschrieben.

Die erfindungsgemäß einzusetzenden Polyolether können insbesondere durch O-Alkylierung von Polyolen oder durch O-Alkylierung von Hydroxy-Alkanen oder Hydroxy-Alkenen hergestellt werden. Dies ist grundsätzlich bekannt und in der Fachliteratur ausführlich beschrieben (Siehe z.B. Römpp oder Ullmann’s Encyclopedia of Industrial Chemistry "Acylation and Alkylation" und die jeweils darin zitierte Literatur). So ist bekannt, dass die Bildung einer Kohlenstoff-Sauerstoffbindung zur Lieferung eines entsprechenden Polyolethers durch Umsetzung eines Polyols mit einem Alkyierungsmittel erreicht werden kann. Als Alkylierungsmittel können Olefine, Alkylhalogenide (Williamson-Ethersynthese), Alkohle, Ether, Epoxide, Aldehyde, Ketone, Thiole, Diazoverbindungen, Sulfonsäureester und verwandte Verbindungen verwendet werden. Typische Katalysatoren bei der Verwendung von Olefinen als Alkylierungsmittel sind beispielsweise H2SO4, saure Ionentauscher, Phosphorsäure und Zeolite. Bei der Williamson-Ethersynthese werden die Alkohole oder Polyole zunächst durch Reaktion mit beispielsweise Natrium oder Kalium oder Natrium oder Kaliumhydrid in ihre Alkoholate überführt und anschließend mit einem Alkylhalogenid als Alkylierungsmittel umgesetzt. Bei der Verwendung von Epoxiden als Alkylierungsmittel können Säuren, Lewis-Säuren, Basen und Lewis-Basen als Katalysatoren verwendet werden.

Die Erfindung wird nachfolgend weiter und beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Bei Prozentangaben handelt es sich, wenn nicht anders angegeben, um Angaben in Gewichtsprozent. Werden nachfolgend Parameter angegeben, die durch Messung bestimmt wurden, so wurden die Messungen, wenn nicht anders angegeben, bei einer Temperatur von 25 °C und einem Druck von 101.325 Pa durchgeführt.

Im Rahmen der vorliegenden Erfindung sind solche Polyolether einsetzbar, welche erhältlich sind durch die Umsetzung eines Polyols mit mindestens einem linearen oder verzweigten, gesättigten oder ungesättigten, primären oder sekundären Alkohol oder entsprechenden Mischungen. Dies entspricht einer Ausführungsform der Erfindung. Entsprechende Polyolether sind an sich bekannt und werden z.B. in WO2012082157 A2 beschrieben.

Weiterhin sind im Rahmen der vorliegenden Erfindung solche Polyolether einsetzbar, welche erhältlich sind durch die Umsetzung eines Polyols mit mindestens einem linearen oder verzweigten Alkyl- oder Alkenylhalogenid oder linearen oder verzweigten Alkyl- oder Alkenylsulfonsäureester, wie z. B. Tosylate, Mesylate, Triflate oder Nonaflate, oder Mischungen solcher Substanzen. Dies entspricht ebenfalls einer Ausführungsform der Erfindung. Entsprechende Polyolether sind ebenfalls an sich bekannt.

Weiterhin sind im Rahmen der vorliegenden Erfindung solche Polyolether einsetzbar, welche erhältlich sind durch die Umsetzung eines Polyols mit mindesten einem linearen oder verzweigten Alkyl- oder Alkenyl-Oxiran, Thiiran oder Aziridin oder Mischungen solcher Substanzen. Dies entspricht ebenfalls einer Ausführungsform der Erfindung. Entsprechende Polyolether sind ebenfalls an sich bekannt.

Weiterhin sind im Rahmen der vorliegenden Erfindung solche Polyether bevorzugt einsetzbar, welche erhältlich sind durch die Umsetzung von linearen oder verzweigten, gesättigten oder ungesättigten, primären oder sekundären Alkoholen mit Glycidol oder Epichlorhydrin oder Glycerincarbonat oder Mischungen dieser Substanzen. Dies entspricht ebenfalls einer bevorzugten Ausführungsform der Erfindung. Entsprechende Polyolether sind ebenfalls an sich bekannt.

Bevorzugte, zur Herstellung der erfindungsgemäßen Polyolether verwendete Polyole sind ausgewählt aus der Gruppe der $C_3$-$C_8$-Polyole sowie deren Oligomere. Insbesondere bevorzugte Polyole sind hierbei 1,3-Propandiol, Propylenglykol, Glycerin, Trimethylolethan, Trimethylolpropan, Sorbitan, Sorbitol, Isosorbid, Erythritol, Threitol, Pentaerythritol, Arabitol, Xylitol, Ribitol, Fucitol, Mannitol, Galaktitol, Iditol, Inositol, Volemitolsowie Glukose. Ganz besonders bevorzugt ist Glycerin. Bevorzugte Polyol-Oligomere sind Oligomere von $C_3$-$C_8$-Polyolen mit 1 - 20, bevorzugt von 2 - 10, besonders bevorzugt von 2,5 - 8 Wiederholungseinheiten. Insbesondere bevorzugt sind hierbei Diglycerin, Triglycerin, Tetraglycerin, Pentraglycerin, Dierythritol, Trierythritol, Tetraerytritol, Di-(Trimethylolpropan), Tri-(Trimethylolpropan) sowie Di- und Oligosaccharide. Ganz besonders bevorzugt sind Sorbitan sowie Oligo- und/oder Polyglycerine. Insbesondere können Mischungen unterschiedlicher Polyole eingesetzt werden.

Unter dem Begriff "Polyglycerin" im Sinne der vorliegenden Erfindung ist ein Polyglycerin zu verstehen, welches auch Glycerin enthalten kann. Somit ist zur Berechnung von Mengen, Massen und dergleichen gegebenenfalls ein Glycerinanteil mit zu berücksichtigen. Polyglycerine im Sinne der vorliegenden Erfindung sind somit auch Mischungen enthaltend mindestens ein Glycerin- Oligomer und Glycerin. Unter Glycerin-Oligomeren sind jeweils alle entsprechenden Strukturen, z.B. also lineare, verzweigte und zyklische Verbindungen zu verstehen. Analoges gilt für den Begriff "Polyglycerinether" im Zusammenhang mit der vorliegenden Erfindung.

Werden zur Herstellung der Polyolether lineare oder verzweigte Alkyl- oder Alkenylhalogenide verwendet, so sind hierbei insbesondere solche Halogenide bevorzugt, welche der allgemeinen Formel R-X entsprechen, wobei X ein Halogenatom, bevorzugt ein Chlor-Atom, noch mehr bevorzugt ein Brom-Atom, noch mehr bevorzugt ein Iod-Atom ist und wobei R ein linearer oder verzweigter, gesättigter oder ungesättigter Kohlenwasserstoffrest mit 4 bis 40 C-Atomen, bevorzugt 8 bis 22, besonders bevorzugt mit 10 bis 18 Kohlenstoffatomen ist. Ganz besonders bevorzugt sind hierbei Alkylhalogenide ausgewählt aus 1-Chloroctan, 1-Chlordecan, 1-Chlordodecan, 1-Chlortetradecan, 1-Chlorhexadecan, 1-Chloroctadecan, 1-Chloreicosan, 1-Chlordocosan sowie deren Mischungen, wobei 1-Chlorhexadecan und 1-Chloroctadecan sowie Mischungen dieser beiden Substanzen ganz besonders bevorzugt sind.

Ganz besonders bevorzugt sind hierbei Alkylhalogenide ausgewählt aus 1-Bromoctan, 1-Bromdecan, 1-Bromdodecan, 1-Bromtetradecan, 1-Bromhexadecan, 1-Bromoctadecan, 1-Bromeicosan, 1-Bromdocosan sowie deren Mischungen, wobei 1-Bromhexadecan und 1-Bromooctadecan sowie Mischungen dieser beiden Substanzen ganz besonders bevorzugt sind.

Ebenfalls ganz besonders bevorzugt sind hierbei Alkylhalogenide ausgewählt aus 1-Iodoctan, 1-Ioddecan, 1-Ioddodecan, 1-Iodtetradecan, 1-Iodhexadecan, 1-Iodoctadecan, 1-Iodeicosan, 1-Ioddocosan sowie deren Mischungen, wobei 1-Iodhexadecan und 1-Iodooctadecan sowie Mischungen dieser beiden Substanzen ganz besonders bevorzugt sind.

Ebenfalls ganz besonders bevorzugt sind hierbei Alkylhalogenide ausgewählt aus 2-Chloroctan, 2-Chlordecan, 2-Chlordodecan, 2-Chlortetradecan, 2-Chlorhexadecan, 2-Chloroctadecan, 2-Chloreicosan, 2-Chlordocosan sowie deren Mischungen, wobei 2-Chlorhexadecan und 2-Chloroctadecan sowie Mischungen dieser beiden Substanzen ganz besonders bevorzugt sind.

Ebenfalls ganz besonders bevorzugt sind hierbei Alkylhalogenide ausgewählt aus 2-Bromoctan, 2-Bromdecan, 2-Bromdodecan, 2-Bromtetradecan, 2-Bromhexadecan, 2-Bromoctadecan, 2-Bromeicosan, 2-Bromdocosan sowie deren Mischungen, wobei 2-Bromhexadecan und 2-Bromoctadecan sowie Mischungen dieser beiden Substanzen ganz besonders bevorzugt sind.

Ebenfalls ganz besonders bevorzugt sind hierbei Alkylhalogenide ausgewählt aus 2-Iodoctan, 2-Ioddecan, 2-Ioddodecan, 2-Iodtetradecan, 2-Iodhexadecan, 2-Iodoctadecan, 2-Iodeicosan, 2-Ioddocosan sowie deren Mischungen, wobei 2-Iodhexadecan und 2-Iodooctadecan sowie Mischungen dieser beiden Substanzen ganz besonders bevorzugt sind.

Werden zur Herstellung der Polyolether Alkylepoxide eingesetzt, so sind hierbei insbesondere Alkylepoxide bevorzugt, welche der allgemeinen Formel 1 entsprechen

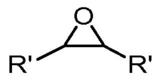

Formel 1

wobei R‘ unabhängig voneinander gleiche oder verschiedene einwertige aliphatische, gesättigte oder ungesättigte Kohlenwasserstoffreste mit 2 bis 38 C-Atomen, bevorzugt 6 bis 20, besonders bevorzugt mit 8 bis 18 Kohlenstoffatomen oder H sind, unter der Maßgabe das mindestens einer der Reste ein Kohlenwasserstoffrest ist. Besonders bevorzugt sind hierbei Alkyl-Epoxide, bei denen genau einer der Reste R‘ ein Kohlenwasserstoffrest und der andere H ist. Ganz besonders bevorzugt sind Epoxide, welche sich von $C_6$ - $C_{24}$ alpha-Olefinen ableiten.

Werden zur Herstellung der Polyolether Alkyl-Glycidylether eingesetzt, so sind diese bevorzugt ausgewählt aus der Gruppe der Glycidylether linearer oder verzweigter, gesättigter oder ungesättigter Alkylakohole mit 4 bis 40 C-Atomen, bevorzugt 8 bis 22, besonders bevorzugt mit 10 bis 18 Kohlenstoffatomen. Ganz besonders bevorzugt sind hierbei Alkyl-Glycidylether ausgewählt aus Octyl-Glycidylether, Decyl-Glycidylether, Dodecyl-Glycidylether, Tetradecyl-Glycidylether, Hexadecyl-Glycidylether, Octadecyl-Glycidylether, Eicosyl-Glycidylether, Docosyl-Glycidylether sowie deren Mischungen, wobei Hexadecyl-Glycidylether und Octadecyl-Glycidylether, sowie Mischungen dieser beiden Substanzen ganz besonders bevorzugt sind.In einer besonders bevorzugten Ausführungsform der vorliegenden Erfindung sind die Polyolether ausgewählt aus der Gruppe der Sorbitanether und/oder Polyglycerinether. Besonders bevorzugt sind Polyglycerinhexadecylether, Polyglycerinoctadecylether sowie Mischungen dieser beiden Substanzen. Ganz besonders bevorzugt sind Polyglycerin-hydroxyhexadecyl-ether und Polyglycerin-hydroxyoctadecyl-ether sowie Mischungen dieser Substanzen. Noch mehr bevorzugt sind Polyglycerin-(1-hydroxyhexadecyl)-ether, Polyglycerin-(2-hydroxyhexadecyl)-ether, Polyglycerin-(1-hydroxyoctadecyl)-ether und Polyglycerin-(2-hydroxyoctadecyl)-ether sowie Mischungen dieser Substanzen.

Insbesondere bevorzugt sind hierbei Polyglycerinether, welche der allgemeinen Formel 2 entsprechen:

$M_aD_bT_c$ Formel 2

wobei

$M = [C_3H_5(OR'')_2O_{1/2}]$
$D = [C_3H_5(OR'')_1O_{2/2}]$
$T = [C_3H_5O_{3/2}]$
a = 1 bis 10, bevorzugt 2 bis 3, insbesondere bevorzugt 2
b = 0 bis 10, bevorzugt größer 0 bis 5, insbesondere bevorzugt 1 bis 4,
c= 0 bis 3, bevorzugt 0
wobei die Reste R" unabhängig voneinander gleiche oder verschiedene einwertige aliphatische, gesättigte oder ungesättigte Kohlenwasserstoffreste mit 2 bis 38 C-Atomen, bevorzugt 6 bis 20, besonders bevorzugt mit 8 bis 18 Kohlenstoffatomen oder H sind, unter der Maßgabe, dass mindestens einer der Reste R" ein Kohlenwasserstoffrest ist, welcher auch Substituenten, insbesondere Hydroxylgruppen tragen kann.

Noch mehr bevorzugt sind Polyglycerinether, welche der allgemeinen Formel 3 entsprechen:

$M_xD_yT_z$ Formel 3

wobei

M = 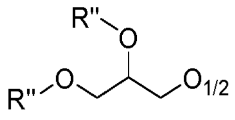

D = 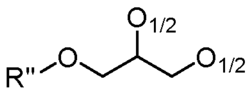 und/oder 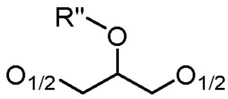

T = 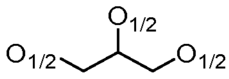

x = 1 bis 10, bevorzugt 2 bis 3, insbesondere bevorzugt 2,
y = 0 bis 10, bevorzugt größer 0 bis 5, insbesondere bevorzugt 1 bis 4,
z = 0 bis 3, bevorzugt größer 0 bis 2, insbesondere bevorzugt 0
unter der Maßgabe, dass mindestens ein Rest R" ungleich Wasserstoff ist, weiterhin R" wie zuvor definiert.

Weiter bevorzugt sind Polyglycerinether der allgemeinen Formel 4:

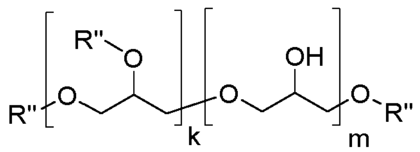

Formel 4

wobei

k = 1 bis 10, bevorzugt 2 bis 3, insbesondere bevorzugt 2,
m = 0 bis 10, bevorzugt größer 0 bis 5, insbesondere bevorzugt 1 bis 3,
unter der Maßgabe, dass mindestens ein Rest R" ungleich Wasserstoff ist, weiterhin R" wie zuvor definiert, und dass die Summe k + m größer null ist und die Fragmente mit den Indices k und m statistisch verteilt sind.

Statistische Verteilungen sind blockweise aufgebaut mit einer beliebigen Anzahl an Blöcken und einer beliebigen Sequenz oder einer randomisierten Verteilung, sie können auch alternierend aufgebaut sein oder auch über die Kette einen Gradienten bilden, insbesondere können sie auch alle Mischformen bilden, bei denen gegebenenfalls Gruppen unterschiedlicher Verteilungen aufeinander folgen können. Spezielle Ausführungen können dazu führen, dass die statistischen Verteilungen durch die Ausführung Beschränkungen erfahren. Für alle Bereiche, die nicht von der Beschränkung betroffen sind, ändert sich die statistische Verteilung nicht.

Bevorzugt weisen die erfindungsgemäß einsetzbaren Polyglycerinether nicht mehr als 6, mehr bevorzugt nicht mehr als 5, weiter mehr bevorzugt nicht mehr als 4 Reste Kohlenwasserstoffreste der Form R", wie oben beschrieben, auf.

Strukturell lassen sich die Polyolether über nasschemische Kennzahlen wie z.B. ihre Hydroxylzahl, charakterisieren. Geeignete Bestimmungsmethoden zur Ermittlung der Hydroxylzahl sind insbesondere solche gemäß DGF C-V 17 a (53), Ph. Eur. 2.5.3 Method A und DIN 53240. Geeignete Methoden zur Bestimmung der Säurezahl sind insbesondere solche gemäß DGF C-V 2, DIN EN ISO 2114, Ph.Eur. 2.5.1, ISO 3682 und ASTM D 974. Geeignete Bestimmungsmethoden zur Ermittlung der Verseifungszahl sind insbesondere solche gemäß DGF C-V 3, DIN EN ISO 3681 und Ph.Eur. 2.5.6.

Geeignete Methoden zur Bestimmung des Epoxy-Sauerstoffgehalts sind insbesondere solche gemäß R. Kaiser "Quantitative Bestimmung organischer funktioneller Gruppen Methoden der Analyse in der Chemie", Akad. Verlagsgesellschaft, 1966 und R. R. Jay, Anal. Chem. 1964, 36 (3), 667-668.

Geeignete Methoden zur Bestimmung des Schmelzpunkts sind insbesondere solche gemäß DIN 53181 , DIN EN ISO 3416, DGF C-IV 3a und Ph.Eur.2.2.14.

Es ist erfindungsgemäß bevorzugt und entspricht einer besonders bevorzugten Ausführungsform der Erfindung, wenn zur Herstellung des Polyglycerinethers ein Polyglycerin mit einem mittleren Kondensationsgrad von 1 - 20, bevorzugt von 2 - 10, besonders bevorzugt von 2,5 - 8 verwendet wird. Der mittlere Kondensationsgrad N lässt sich hierbei anhand der OH-Zahl (*OHZ*, in mg KOH/g) des Polyglycerins ermitteln und ist mit dieser verknüpft gemäß:

$$N = \frac{112200 - 18 \cdot OHZ}{75 \cdot OHZ - 56100}$$

Die OH-Zahl des Polyglycerins kann hierbei wie oben beschrieben bestimmt werden. Folglich sind insbesondere solche Polyglycerine zur Herstellung der erfindungsgemäßen Polyglycerinether bevorzugt, welche eine OH-Zahl von 1829 bis 824, besonders bevorzugt von 1352 - 888, insbesondere bevorzugt von 1244 - 920 mg KOH/g aufweisen.

Das eingesetzte Polyglycerin kann durch verschiedene konventionelle Methoden wie beispielsweise Polymerisation von Glycidol (z.B. basenkatalysiert), Polymerisation von Epichlorhydrin (beispielsweise in Gegenwart äquimolarer Mengen einer Base wie NaOH) oder Polykondensation von Glycerin bereitgestellt werden. Solches ist aus der Literatur bekannt.

Es wurde bereits klargestellt, dass der Begriff der Polyolether im Sinne der gesamten vorliegenden Erfindung auch deren ionische Derivate, bevorzugt die phosphorylierten und sulfatierten Derivate, insbesondere phosphorylierte Polyolether umfasst. Phosphorylierte Polyolether sind hierbei durch Umsetzung der Polyolether mit einem Phosphorylierungsreagenz und optionaler, vorzugsweise obligatorischer, anschließender Neutralisation erhältlich (vgl. insbesondere Industrial Applications of Surfactants. II. Preparation and Industrial Applications of Phosphate Esters. Edited by D. R. Karsa, Royal Society of chemistry, Cambridge, 1990). Bevorzugte Phosphorylierungsreagenzien im Sinne dieser Erfindung sind Phosphoroxychlorid, Phosphorpentoxid ($P_4O_{10}$) und besonders bevorzugt Polyphosphorsäure. Der Begriff der phosphorylierten Polyolether deckt im Sinne der gesamten vorliegenden Erfindung auch die partiell phosphorylierten Polyolether ab, und ebenso deckt der Begriff der sulfatierten Polyolether im Sinne der gesamten vorliegenden Erfindung auch die partiell sulfatierten Polyolether ab.

Darüber hinaus können ionische Derivate der Polyolether im Sinne der gesamten vorliegenden Erfindung auch durch Umsetzung der Polyether mit Di- oder Tricarbonsäure bzw. entsprechenden zyklischen Anhydriden und optionaler, vorzugsweise obligatorischer Neutralisation erhalten werden.

Darüber hinaus können ionische Derivate der Polyolether im Sinne der gesamten vorliegenden Erfindung auch durch Umsetzung der Polyether mit ungesättigten Di- oder Tricarbonsäuren bzw. entsprechenden zyklischen Anhydriden und anschließender Sulfonierung sowie optionaler, vorzugsweise obligatorischer Neutralisation erhalten werden.

Der Begriff der Neutralisation deckt im Sinne der gesamten vorliegenden Erfindung auch eine partielle Neutralisation ab. Zur Neutralisation, umfassend partielle Neutralisation, können übliche Basen eingesetzt werden. Hierzu gehören die wasserlöslichen Metallhydroxide, wie z. B. Barium-, Strontium-, Calcium-, Thallium(I)-hydroxid und vorzugsweise die Hydroxide der Alkalimetalle, die in wäßrigen Lösungen in freie Metall- und Hydroxid-Ionen dissoziieren, insbesondere NaOH und KOH. Hierzu gehören auch die Anhydrobasen, die mit Wasser unter Bildung von Hydroxid-Ionen reagieren, wie z.B. Bariumoxid, Strontiumoxid, Calciumoxid, Lithiumoxid, Silberoxid und Ammoniak. Neben diesen vorgenannten Alkalien sind auch solche festen Stoffe als Basen einsetzbar, die bei der Auflösung in Wasser ebenfalls alkalisch reagieren, ohne (in der festen Verbindung) HO- zu besitzen, hierzu zählen z.B. Amine wie Mono-, Di- und Trialkylamine, wobei es sich auch um funktionalisierte Alkylreste wie beispielsweise bei Amidaminen handeln kann, Mono-, Di- und Trialkanolamine, Mono-, Di- und Triaminoalkylamine und z. B. die Salze schwacher Säuren wie Kaliumcyanid, Kaliumcarbonat, Natriumcarbonat, Trinatriumphosphat usw.

Ganz besonders bevorzugte Polyolether im Sinne dieser Erfindung sind hierbei phosphorylierte Sorbitanether und/oder phosphorylierte Polyglycerinether, vor allem phosphorylierte Polyglycerin-Ether. Insbesondere sind ein phosphorylierter und neutralisierter Polyglycerin-Hexadecylether, ein phosphorylierter und neutralisierter Polyglycerin-Octadecylether oder eine Mischung dieser Substanzen bevorzugt.

Eine besonders bevorzugte Ausführungsform dieser Erfindung sieht den erfindungsgemäßen Einsatz von Polyolethern der Formel 2, 3 und/oder 4, vor, wie zuvor angegeben, mit der zusätzlichen Maßgabe, dass diese (zumindest teilweise) phosphoryliert sind, so dass diese Polyolether der Formel 2, 3 und/oder 4 insbesondere als Rest R" zumindest einen Rest $(R'''O)_2P(O)$- tragen, wobei die Reste R‴ unabhängig voneinander Kationen, vorzugsweise $Na^+$, $K^+$ oder $NH_4^+$, oder Ammoniumionen von Mono-, Di- und Trialkylaminen, wobei es sich auch um funktionalisierte Alkylreste wie beispielsweise bei Amidaminen handeln kann, von Mono-, Di- und Trialkanolaminen, von Mono-, Di- und Triaminoalkylaminen oder H oder R⁗-O- sind,
wobei R⁗ ein einwertiger aliphatischer, gesättigter oder ungesättigter Kohlenwasserstoffrest mit 3 bis 39 C-Atomen, bevorzugt 7 bis 22, besonders bevorzugt mit 9 bis 18 Kohlenstoffatomen oder ein Polyolrest ist.

Bei den sulfatierten Polyolethern sind insbesondere solche bevorzugt, welche durch Umsetzung der Polyolether mit Schwefeltrioxid oder Amidosulfonsäure zugänglich sind. Bevorzugt sind hierbei sulfatierte Sorbitanether und/oder sulfatierte Polyglycerin-Ether.

In einer besonders bevorzugten Ausführungsform der vorliegenden Erfindung werden Polyolether nicht pur, sondern in Abmischung mit mindestens einem Co-Tensid als Additive in wässrigen Polymerdispersionen verwendet. Erfindungsgemäß bevorzugte Co-Tenside sind z.B. Fettsäureamide, Alkylalkoxylate, wie z.B. Fettalkoholethoxylate, Nonylphenolethoxylate, Ethylenoxid-Propylenoxid-Blockcopolymere, Betaine, wie z.B. Amido-Propyl-Betaine, Aminoxide, quaternäre Ammonium-Tenside oder Amphoacetate. Weiterhin kann es sich bei dem Co-Tensid um Silikonbasierte Tenside, wie z.B. Trisiloxan-Tenside oder Polyether-Siloxane handeln.

Insbesondere bevorzugte Co-Tenside sind ionische, bevorzugt anionische Co-Tenside. Bevorzugte anionische Co-Tenside sind hierbei Ammonium und/oder Alkali-Salze von Fettsäure, Alkylsulfate, Alkylethersulfate, Alkylsulfonate, Alkylbenzolsulfonate, Alkylphosphate, Alkyl-Sulfosuccinate, Alkyl-Sulfosuccinamate und Alkylsarcosinate. Insbesondere bevorzugt sind hierbei Alkylsulfate mit 12-20 Kohlenstoffatomen, mehr bevorzugt mit 14-18 Kohlenstoffatomen, noch mehr bevorzugt mit mehr als 16-18 Kohlenstoffatomen. Im Falle von Ammonium und/oder Alkali-Salzen von Fettsäure ist es bevorzugt, wenn diese weniger als 25 Gew.-% Stearat-Salze enthalten, insbesondere frei von Stearat-Salzen sind.

Bei der Verwendung von Co-Tensiden ist es insbesondere bevorzugt, wenn der Anteil an Co-Tensid bezogen auf die Gesamtmenge Polyolether plus Co-Tensid im Bereich von 0,1 - 50 Gew.-%, bevorzugt im Bereich von 0,2 - 40 Gew.-%, mehr bevorzugt im Bereich von 0,5 - 30 Gew.-%, noch mehr bevorzugt im Bereich von 1 - 25 Gew.-% liegt.

Wie bereits beschrieben ist ein Gegenstand der vorliegenden Erfindung die Verwendung von Polyolethern als Additive in wässrigen Polymer-Dispersionen zur Herstellung poröser Polymerbeschichtungen. Die Polymer-Dispersionen sind hierbei bevorzugt ausgewählt aus der Gruppe wässriger Polystyrol-Dispersionen, Polybutadien-Dispersionen, Poly(meth)acrylat-Disperionen, Polyvinylester-Dispersionen und Polyurethan-Dispersionen. Der Festkörper-Anteil dieser Dispersionen liegt bevorzugt im Bereich von 20 - 70 Gew.-%, mehr bevorzugt im Bereich von 25 - 65 Gew.-%. Erfindungsgemäß besonders bevorzugt ist die Verwendung von Polyolethern als Additive in wässrigen Polyurethan-Dispersionen. Insbesondere bevorzugt sind hierbei Polyurethan-Dispersionen basierend auf Polyester-, Polyesteramide-, Polycarbonate-, Polyacetal- und Polyether-Polyolen.

Die Einsatzkonzentration der erfindungsgemäßen Polyolether in wässrigen Polymer-Dispersionen liegt bevorzugt im Bereich von 0,2 - 10 Gew.-%, besonders bevorzugt im Bereich von 0,4 - 7,5 Gew.-%, insbesondere bevorzugt im Bereich von 0,5 - 5 Gew.-% bezogen auf das Gesamtgewicht der Dispersion.

Die Polyolether können der wässrigen Dispersion sowohl pur als auch verdünnt in einem geeigneten Lösemittel zugeben werden. Bevorzugte Lösemittel sind hierbei ausgewählt aus Wasser, Propylenglykol, Dipropylenglykol, Polypropylenglykol, Butyldiglykol, Butyltriglykol, Ethylenglykol, Diethylenglykol, Polyethylenglykol, Polyalkylenglykole auf Basis von EO, PO, BO und/oder SO, sowie Mischungen dieser Substanzen. Im Fall von wässrigen Verdünnungen bzw. Abmischungen der erfindungsgemäßen Polyolether kann es vorteilhaft sein, wenn zur Verbesserung der Formulierungseigenschaften (Viskosität, Homogenität etc.) der Abmischung hydrotrope Verbindungen zugesetzt werden. Hydrotrope Verbindungen sind hierbei wasserlösliche organische Verbindungen, welche aus einem hydrophilen und einem hydrophoben Part bestehen, jedoch zu niedermolekularsind, um tensidische Eigenschaften aufzuweisen. Sie führen zu einer Verbesserung der Löslichkeit bzw. der Löslichkeitseigenschaften organischer, insbesondere hydrophober organischer Substanzen in wässrigen Formulierungen. Der Begriff Hydrotrope Verbindungen ist dem Fachmann bekannt. Als Hydrotrope Verbindungen sind im Rahmen der vorliegenden Erfindung Alkali- und Ammonium-Toluolsulfonate, Alkali- und Ammonium-Xylolsulfonate, Alkali- und Ammonium-Naphtalinsulfonate, Alkali- und Ammonium-Cumolsulfonate sowie Phenol-Alkoxylate, insbesondere Phenol-Ethoxylate mit bis zu 6 Alkoxylat-Einheiten bevorzugt.

Neben den erfindungsgemäßen Polyolethern können die wässrigen Polymerdispersionen noch weitere Additive wie z.B. Füllstoffe, organische und anorganische Pigmente, Mattierungsmittel, Stabilisatoren, wie Hydrolyse- oder UV-Stabilisatoren, Antioxidantien, Absorber, Vernetzer, Verlaufsadditive, Verdicker oder ggf. andere Co-Tenside, wie oben beschrieben, enthalten.

Bevorzugt werden die erfindungsgemäßen Polyolether in wässrigen Polymer-Dispersionen als Schaumhilfsmittel bzw. Schaumstabilisatoren zum Aufschäumen der Dispersionen verwendet. Weiterhin können sie jedoch auch als Trocknungshilfsmittel, Verlaufsadditive, Netz-Mittel sowie Rheologieadditive verwendet werden.

Da, wie oben beschrieben, die Polyolether zu einer deutlichen Verbesserung von aus wässrigen Polymerdispersionen hergestellten, porösen Polymerbeschichtungen führen, sind wässrige Polymerdispersionen enthaltend mindestens einen der erfindungsgemäßen Polyolether, wie zuvor ausführlich beschrieben, ebenfalls Gegenstand der vorliegenden Erfindung.

Noch ein Gegenstand der vorliegenden Erfindung sind aus wässrigen Polymerdispersionen hergestellte poröse Polymerschichten, erhalten unter Einsatz der erfindungsgemäßen Polyolether als Additive, wie zuvor ausführlich beschrieben.

Bevorzugt lassen sich die erfindungsgemäßen porösen Polymerbeschichtungen durch ein Verfahren herstellen umfassend die Schritte

a) Bereitstellen einer Mischung enthaltend eine wässrige Polymerdispersion, wie oben beschrieben, mindestens einen der erfindungsgemäßen Polyolether sowie ggf. weitere Additive
b) Aufschäumen der Mischung zu einem homogenen, feinzelligen Schaum
c) Optional Zugabe mindestens eines Verdickers zur Einstellung der Viskosität des Nasschaums
d) Auftragen einer Beschichtung der geschäumten Polymer-Dispersion auf einen geeigneten Träger
e) Trocknen der Beschichtung

Mit Blick auf bevorzugte Ausgestaltungen, insbesondere mit Blick auf die in dem Verfahren bevorzugt einsetzbaren Polyolether und bevorzugt einsetzbare wässrige Polymerdispersion sei auf die vorangegangene Beschreibung und auch auf die zuvor genannten bevorzugten Ausführungsformen, insbesondere wie in den Ansprüchen 2-11 dargestellt, verwiesen.

Es wird klargestellt, dass die Verfahrensschritte des erfindungsgemäßen Verfahrens wie oben dargestellt keiner festen zeitlichen Abfolge unterworfen sind. So kann beispielsweise der Verfahrensschritt c) bereits zeitgleich mit dem Verfahrensschritt a) ausgeführt werden.

Es entspricht einer bevorzugten Ausführungsform der vorliegenden Erfindung, wenn im Verfahrensschritt b) die wässrige Polymerdispersion durch das Aufbringen hoher Scherkräfte aufgeschäumt wird. Das Aufschäumen kann hierbei unter zu Hilfenahme von dem Fachmann geläufigen Scheraggregaten wie z.B. Dispermaten, Dissolvern, Hansa-Mixern oder Oakes-Mixern erfolgen.

Weiterhin ist bevorzugt, wenn der am Ende des Verfahrensschritt c) hergestellte Nassschaum eine Viskosität von mindestens 3, bevorzugt von mindestens 5, mehr bevorzugt von mindestens 7,5, noch mehr bevorzugt von mindestens 10 Pa s aufweist. Die Viskosität des Schaums lässt sich hierbei z.B. mit Hilfe eines Viskosimeters der Firma Brookfield, Modell LVTD ausgerüstet mit einer Spindel LV-4, bestimmen. Entsprechende Messmethoden zur Bestimmung der Nassschaumviskosität sind dem Fachmann bekannt.

Wie oben bereits beschrieben, können dem System zur Einstellung der Nassschaumviskosität zusätzliche Verdicker zugesetzt werden.

Bevorzugt sind die Verdicker, die im Rahmen der Erfindung vorteilhafterweise eingesetzt werden können, hierbei ausgewählt aus der Klasse der Assoziativverdicker. Assoziativverdicker sind hierbei Substanzen, die durch Assoziation an den Oberflächen der in den Polymerdispersionen enthaltenen Partikeln zu einem verdickenden Effekt führen. Der Begriff ist dem Fachmann bekannt. Bevorzugte Assoziativverdicker sind hierbei ausgewählt aus Polyurethanverdickern, hydrophob-modifizierten Polyacrylat-Verdickern, hydrophob-modifizierten Polyether-Verdickern sowie hydrophob modifizerten Celluloseethern. Ganz besonders bevorzugt sind Polyurethanverdicker. Weiterhin ist es im Rahmen der vorliegenden Erfindung bevorzugt, wenn die Konzentration der Verdicker bezogen auf die Gesamtzusammensetzung der Dispersion im Bereich von 0,01 - 10 Gew.-%, mehr bevorzugt im Bereich von 0,05 - 5 Gew.-%, ganz besonders bevorzugt im Bereich von 0,1 - 3 Gew.-% liegt.

Im Rahmen der vorliegenden Erfindung ist es zudem bevorzugt, wenn in Verfahrensschritt d) Beschichtungen der geschäumten Polymerdispersion mit einer Schichtdicke von 10 - 10000 μm, bevorzugt von 50 - 5000 μm, mehr bevorzugt von 75 - 3000, μm noch mehr bevorzugt von 100 - 2500 μm hergestellt werden. Beschichtungen der geschäumten Polymerdispersion können durch dem Fachmann geläufige Methoden, wie z.B. Aufrakeln, hergestellt werden. Hierbei können sowohl direkte also auch indirekte Beschichtungsprozesse (sogenanntes Transfer-Coating) verwendet werden.

Außerdem ist es ihm Rahmen der vorliegenden Erfindung bevorzugt, wenn in Verfahrensschritt e) die Trocknung der geschäumten und beschichteten Polymerdispersion bei erhöhten Temperaturen erfolgt. Erfindungsgemäß bevorzugt sind hierbei Trocknungstemperaturen von min. 50 °C, bevorzugt von 60 °C, mehr bevorzugt von mindestens 70 °C. Weiterhin ist es möglich die geschäumten und beschichteten Polymerdispersionen mehrstufig bei verschiedenen Temperaturen zu trocknen, um das Auftreten von Trocknungsdefekten zu vermeiden. Entsprechende Trocknungstechniken sind in der Industrie verbreitet und dem Fachmann bekannt.

Wie bereits beschrieben können die Verfahrensschritte c) - e) unter zu Hilfenahme von verbreiteten, dem Fachmann bekannten Methoden erfolgen. Eine Übersicht hierrüber ist Beispielsweise in "Coated and laminated Textiles" (Walter Fung, CR-Press, 2002) gegeben.

Im Rahmen der vorliegenden Erfindung sind insbesondere solche porösen Polymerbeschichtungen enthaltend Polyolether bevorzugt, welche eine mittlere Zellgröße kleiner 250 μm, bevorzugt kleiner 150 μm, insbesondere bevorzugt kleiner 100 μm, ganz besonders bevorzugt kleiner 75 μm aufweisen. Die mittlere Zellgröße lässt sich vorzugsweise mikroskopisch, vorzugsweise durch Elektronenmikroskopie bestimmen. Hierfür wird ein Querschnitt der porösen Polymerbeschichtung mittels eines Mikroskops mit einer ausreichenden Vergrößerung betrachtet und die Größe von mindestens 25 Zellen ermittelt. Um eine ausreichende Statistik dieser Auswertemethode zu erhalten sollte die Vergrößerung des Mikroskops vorzugsweise so gewählt sein, dass sich mindestens 10x10 Zellen im Beobachtungsfeld befinden. Die mittlere Zellgröße ergibt sich dann als arithmetisches Mittel der betrachteten Zellen bzw. Zellgrößen. Diese Zellgrößenbestimmung mittels Mikroskopie ist dem Fachmann geläufig.

Die erfindungsgemäßen poröse Polymerschichten (bzw. Polymerbeschichtungen) enthaltend Polyolether können beispielsweise in der Textil-Industrie, z.B. für Kunstleder-Materialien, in der Bau- und Construction-Industrie, in der Elektronik-Industrie, z.B. für geschäumte Abdichtungen, in der Sportindustrie, z.B. zur Herstellung von Sportmatten oder in der Automobil-Industrie verwendet werden.

**Beispiele**

Substanzen:

Impranil® DLU: aliphatische Polycarbonatester-Polyether Polyurethandispersion von der Firma Covestro

Stokal® STA: Ammonium-Stearat (ca. 30 %ig in $H_2O$) von der Firma Bozetto

Stokal® SR: Talkfett-basiertes Natrium-Sulfosuccinamat (ca. 35 %ig in $H_2O$) von der Firma Bozetto

Tego® Viscoplus 3030: polyurethan-basierter Assoziativ-Verdicker der Firma Evonik Industries AG.

Viskositätsmessungen:
Alle Viskositätsmessungen wurden mit einem Viskosimeter der Firma Brookfield, Typ LVTD ausgerüstet mit Spindel LV-4, bei einer konstanten Rotationsgeschwindigkeit von 12 rpm durchgeführt. Für die Viskositätsmessungen wurden die Proben in ein 100 ml Glas gefüllt, in welches die Messspindel eintauchte. Es wurde stets gewartet, bis das Viskosimeter einen konstanten Messwert anzeigte.

Beispiel 1A: Synthese von Polyglyceryl-Hydroxystearylether

Ein Gemisch aus kommerziell erhältlichem Polyglycerin-3 (Spiga Nord, Hydroxylzahl 1124 mg KOH/g, 52.5 g, 0.219 mol, 1.0 Äquiv.) und Natriummethanolat (1.96 g einer 25%igen Lösung in Methanol, 0.009 mol, 0.04 Äquiv.) wurde unter Rühren und Nz-Einleitung bei 15 mbar innerhalb von 2 h auf 180 °C erhitzt und das Methanol abdestilliert. Nach dem Erreichen von 180 °C wurde das Vakuum gebrochen und anschließend auf 80 °C erwärmtes 1,2-Epoxyoctadecan (CAS RN 7390-81-0, 85%, 97.0 g, 0.361 mol, 1.65 Äquiv.) langsam über 1 h zugetropft. Das Gemisch wurde für weitere 4 h bei 180 °C gerührt, bis ein Epoxy-Sauerstoff-Gehalt von 0.16% erreicht war. Anschließend wurde das Gemisch auf 90 °C abgekühlt und die Phasen getrennt. Man erhielt 5.6 g unumgesetztes Polyglycerin (untere Phase) und 113 g Polyglyceryl-Hydroxyalkylether (obere Phase, Schmelzpunkt = 71.5 °C, Hydroxylzahl = 387 mg KOH/g, Säurezahl = 0.4 mg KOH/g, Epoxy-Sauerstoffgehalt = 0.06%).

Beispiel 1B: Phosphorylierung von Polyglyceryl-Hydroxystearylether

Ein Gemisch aus einem Polyglyceryl-Hydroxyalkylether (97.62 g, erhalten wie in Beispiel 1A beschrieben) und Polyphosphorsäure (115% $H_3PO_4$, 2.38 g) wurde für 4 h unter Rühren auf 80 °C erhitzt. Danach wies das Gemisch eine Säurezahl von 27.6 mg KOH/g auf. Anschließend wurde bei 80 °C 45%ige wässrige KOH-Lösung (9.77 g) zugegeben und für weitere 30 min bei 80 °C gerührt. Das Gemisch wies eine Säurezahl von 1.3 mg KOH/g auf.

Beispiel 1C: Synthese eines Polyglyceryl-Hydroxystearylether-Stearats

Ein Gemisch aus einem Polyglyceryl-Hydroxyalkylether (150 g, erhalten wie in Beispiel 1A beschrieben) und Stearinsäure (44.3 g, 0.156 mol) wurde unter Rühren und Nz-Einleitung innerhalb von 3 h auf 240 °C erhitzt und solange bei 240 °C gerührt bis eine Säurezahl von ≤1 mg KOH/g erreicht war. Man erhielt 186 g Polyglyceryl-Hydroxystearylether-Stearat (Hydroxylzahl = 264 mg KOH/g, Säurezahl = 0.6 mg KOH/g, Verseifungszahl 44 mg KOH/g).

Beispiel 2A: Synthese von Polyglyceryl-Hydroxystearylether

Ein Gemisch aus kommerziell erhältlichem Polyglycerin-3 (Spiga Nord, Hydroxylzahl 1124 mg KOH/g, 52.6 g, 0.219 mol, 1.0 Äquiv.) und konz. Schwefelsäure (0.36 g) wurde unter Rühren und $N_2$-Einleitung bei 15 mbar innerhalb von 1 h auf 100 °C erhitzt. Nach dem Erreichen von 100 °C wurde das Vakuum gebrochen und anschließend auf 80 °C erwärmtes 1,2-Epoxyoctadecan (CAS RN 7390-81-0, 85%, 97.1 g, 0.362 mol, 1.65 Äquiv.) langsam über 1 h zugetropft. Das Gemisch wurde für weitere 4 h bei 100 °C gerührt, bis ein Epoxy-Sauerstoff-Gehalt von 0.01% erreicht war. Anschließend wurde das Gemisch auf 90 °C abgekühlt und die Phasen getrennt. Man erhielt 22.8 g unumgesetztes Polyglycerin (untere Phase) und 113.8 g Polyglyceryl-Hydroxystearylether (obere Phase, Schmelzpunkt = 49.5 °C, Hydroxylzahl = 268 mg KOH/g, Säurezahl = 0.6 mg KOH/g, Epoxy-Sauerstoffgehalt = 0.01%).

Beispiel 2B: Phosphorylierung von Polyglyceryl-Hydroxystearylether

Ein Gemisch aus einem Polyglyceryl-Hydroxyalkylether (98.81 g) erhalten wie in Beispiel 2A beschrieben und

Polyphosphorsäure (115% $H_3PO_4$, 1.19 g) wurde für 4 h unter Rühren auf 80 °C erhitzt. Danach wies das Gemisch eine Säurezahl von 12 mg KOH/g auf. Anschließend wurde bei 80 °C 45%ige wässrige KOH-Lösung (2.67 g) zugegeben und für weitere 30 min bei 80 °C gerührt. Das Gemisch wies eine Säurezahl von 1.0 mg KOH/g auf.

Beispiel 2C: Synthese von Kalium- Polyglyceryl-Hydroxystearylether -Succinat

Ein Polyglyceryl-Hydroxyalkylether (300 g) erhalten wie in Beispiel 2A beschrieben wurde auf 80 °C erhitzt und unter Rühren wurde innerhalb von 1 h Bernsteinsäureanhydrid (9.15 g) portionsweise zugegeben. Das Gemisch wurde für weitere 2 h bei 80 °C gerührt bis eine Säurezahl von 19.2 mg KOH/g erreicht war. Anschließend wurden 12.90 g einer 45%igen wässrigen KOH-Lösung zugegeben und das Gemisch für weitere 15 min gerührt. Das erhaltene Kalium-Polyglyceryl-Hydroxystearylether -Succinat wies eine Säurezahl: 8.0 mg KOH/g auf.

Beispiel 3: Formulierung und Abmischung erfindungsgemäßer Tenside

Die erfindungsgemäßen Tenside aus Bespiel 1 A-C sowie 2 A-C wurden gemäß der in Tabelle 1 und 2 aufgeführten Zusammensetzungen abgemischt und anschließend bei 80 °C homogenisiert:

**Tabelle 1:** Zusammensetzung von im Folgenden verwendeten Tensidabmischungen

| | **Tensid 1** | **Tensid 2** | **Tensid 3** |
|---|---|---|---|
| Polyglycerin-Hydroxystearylether (aus Beispiel 1 A) | 19,7 g | --- | --- |
| Phosphorylierter Polyglycerin-Hydroxystearylether (aus Beispiel 1 B) | --- | 21,3 g | --- |
| Polyglycerin-Hydroxystearylether-Stearat (aus Beispiel 1 C) | --- | --- | 19,7 g |
| Cetearyl-Sulfat | 1,6 g | --- | 1,6 g |
| Wasser | 59,1 g | 59,1 g | 59,1 g |
| Propylenglykol | 6,25 g | 6,25 g | 6,25 g |

**Tabelle 2:** Zusammensetzung von im Folgenden verwendeten Tensidabmischungen

| | **Tensid 4** | **Tensid 5** | **Tensid 6** |
|---|---|---|---|
| Polyglycerin-Hydroxystearylether (aus Beispiel 2 A) | 19,7 g | --- | --- |
| Phosphorylierter Polyglycerin-Hydroxystearylether (aus Beispiel 2 B) | --- | 21,3 g | --- |
| Kalium- Polyglyceryl-Hydroxystearylether -Succinat (aus Beispiel 2 C) | --- | --- | 21,3 g |
| Cetearyl-Sulfat | 1,6 g | --- | --- |
| Wasser | 59,1 g | 59,1 g | 59,1 g |
| Propylenglykol | 6,25 g | 6,25 g | 6,25 g |

Beispiel 4:

150 g der Dispersion Impranil® DLU wurden in einem 500 ml Plastikbecher vorgelegt und mit Hilfe eines Dissolvers der Firma VMA Getzmann ausgestattet mit einer Dissolverscheibe (Ø = 6 cm) für 3 min bei 800 rpm gerührt. Während dieser Zeit wurde mit Hilfe einer Spritze langsam das Tensid zugegeben. Die genauen Zusammensetzungen der Proben sind in den Tabellen 3 und 4 aufgeführt.

Zum Aufschäumen der Mischungen wurde die Schergeschwindigkeit anschließend auf 2000 rpm erhöht, wobei darauf geachtet wurde, dass die Dissolverscheibe stets soweit in die Dispersion eintauchte, dass sich eine ordentliche Trombe bildete. Bei dieser Geschwindigkeit wurden die Mischungen auf ein Volumen von ca. 425 ml geschäumt. Die hierfür benötigte Scherdauer ist ebenfalls in den Tabellen 3 und 4 vermerkt. Danach wurde die Schergeschwindigkeit auf 1000 rpm reduziert; mit Hilfe einer Spritze wurde Tego® Viscoplus 3030 zugesetzt und erneut für 15 min geschert. Die Dissolverscheibe wurde in diesem Schritt so tief in die Mischungen eingetaucht, sodass keine weitere Luft ins System eingetragen wurde, jedoch das komplette Volumen noch in Bewegung war.

In allen Fällen wurden am Ende dieses Aufschäumvorgangs feine, homogene Schäume erhalten. Auffällig war, dass die Schäume, welche mit den erfindungsgemäßen Tensiden 1 - 6 hergestellt wurden, trotz geringerer Verdickerkonzentration eine höhere Viskosität aufwiesen (siehe Tabelle 3 und 4). Die Schäume wurde mit Hilfe eines Filmziehgeräts (Typ AB3220 der Firma TQC) ausgerüstet mit einem Kastenrakel (Rakelstärke = 800 μm) auf eine silikonisierte Polyesterfolie gecoatet und anschließend für 10 min. bei 60 °C sowie für weitere 5 min bei 120 °C getrocknet.

Verglichen mit Probe 1 zeichneten sich die getrockneten erfindungsgemäßen Proben 2 - 7 durch eine homogenere makroskopische Erscheinung sowie durch einen samtigeren Griff aus. Die Bewertung der Zellstruktur der getrockneten Proben erfolgte mittels Rasterelektronenmikroskopie. Hierbei konnte im Falle der Vergleichsprobe 1 eine mittlere Zellgröße von ca. 120 μm festgestellt werden, während die erfindungsgemäßen Proben 2 und 3 eine deutlich feinere Zellgröße von ca. 55 μm aufwiesen.

**Tabelle 3:** Übersicht der in Beispiel 4 hergestellten Schäume

| | Probe 1 | Probe 2 | Probe 3 | Probe 4 |
|---|---|---|---|---|
| Impranil® DLU | 150 g | 150 g | 150 g | 150 g |
| Stokal® STA | 2,4 g | | | |
| Stokal® SR | 1,8 g | | | |
| Tensid 1 | | 4 g | | |
| Tensid 2 | | | 4 g | |
| Tensid 3 | | | | 4 g |
| Tego® Viscoplus 3030 | 0,7 g | 0,2 g | 0,2 g | 0,2 g |
| Scherdauer | 3 min | 4,5 min | 4 min | 3,5 min |
| Schaumviskosität | 14 Pa s | 21 Pa s | 18,5 Pa s | 19 Pa s |
| Zellgröße Endschaum | ca. 120 μm | ca. 55 μm | ca. 55 μm | Ca. 55 μm |

**Tabelle 4:** Übersicht der in Beispiel 4 hergestellten Schäume

| | Probe 5 | Probe 6 | Probe 7 |
|---|---|---|---|
| Impranil® DLU | 150 g | 150 g | 150 g |
| Tensid 4 | 4 g | | |
| Tensid 5 | | 4 g | |
| Tensid 6 | | | 4 g |
| Tego® Viscoplus 3030 | 0,2 g | 0,2 g | 0,2 g |
| Scherdauer | 4 min | 4 min | 4.5 min |
| Schaumviskosität | 17 Pa s | 20,5 Pa s | 19 Pa s |
| Zellgröße Endschaum | ca. 55 μm | ca. 55 μm | ca. 55 μm |

Beispiel 5:

Die in den Tabellen 3 und 4 aufgeführten Zusammensetzungen wurden analog dem in Beispiel 4 beschriebenen Verfahren aufgeschäumt und mit Hilfe eines Kastenrakels (Rakelstärke = 800 μm) auf eine silikonisierte Polyesterfolie gecoatet. Die Trocknung der Proben erfolgte diesmal jedoch lediglich für 5 min. bei 90 °C sowie für 3 min bei 120 °C. Hierbei konnte beobachtet werden, dass die Vergleichsprobe 1 nach dem Trocknen deutliche Defekte (Trocknungsrisse) aufwies, während sich die erfindungsgemäßen Proben 2 - 7 trotz der verkürzten, schärferen Trocknungsbedingungen defektfrei trocknen ließen.

Zusätzlich wurde von allen Proben eine Beschichtung mit einer Rakelstärke von 2000 μm hergestellt. Diese wurde für 10 min bei 60 °C, für 10 min bei 90 °C sowie für 10 min bei 120 °C getrocknet. Auch hier ließen sich die Proben 2 - 7, welche die erfindungsgemäßen Tenside enthielten, defektfrei trocknen, während die Vergleichsprobe deutliche Trocknungsrisse 1 aufwies.

## Patentansprüche

1. Verwendung von Polyolethern als Additive in wässrigen Polymer-Dispersionen zur Herstellung poröser Polymerbeschichtungen, wobei die Polyolether erhältlich sind durch die Umsetzung eines Polyols mit mindestens einem Alkyl- oder Alkylenhalogenid, mindestens einem primären oder sekundärem Alkohol oder aber mindestens einem Alkyl- oder Alkenyl-Oxiran, Thiiran oder Aziridin, oder erhältlich durch die Umsetzung von primären oder sekundären Alkoholen mit Glycidol, Epichlorhydrin und/oder Glycerincarbonat, wobei die Polyole ausgewählt sind aus der Gruppe der $C_3$-$C_8$-Polyole und deren Oligomeren.

**2.** Verwendung nach Anspruch 1, wobei die Polyolether erhältlich sind durch die Umsetzung eines Polyols mit mindestens einem Alkylhalogenid.

**3.** Verwendung nach Anspruch 1 oder 2, wobei die Polyole 1,3-Propandiol, Propylenglykol, Glycerin, Trimethylolethan, Trimethylolpropan, Sorbitan, Sorbitol, Isosorbid, Erythritol, Threitol, Pentaerythritol, Arabitol, Xylitol, Ribitol, Fucitol, Mannitol, Galaktitol, Iditol, Inositol, Volemitol sowie Glukose, insbesondere Glycerin sind, und wobei bevorzugte Polyol-Oligomere die Oligomere von $C_3$-$C_8$-Polyolen mit 1 - 20, bevorzugt von 2 - 10, besonders bevorzugt von 2,5 - 8 Wiederholungseinheiten sind, besonders bevorzugt sind hierbei Diglycerin, Triglycerin, Tetraglycerin, Pentraglycerin, Dierythritol, Trierythritol, Tetraerytritol, Di-(Trimethylolpropan), Tri-(Trimethylolpropan) sowie Di- und Oligosaccharide, insbesondere Sorbitan, Oligo- und/oder Polyglycerine.

**4.** Verwendung nach einem der Ansprüche 1 bis 3, **dadurch gekennzeichnet, dass** das Alkylhalogenid der allgemeinen Formel R-X entspricht, wobei X ein Halogenatom, bevorzugt ein Chlor-Atom ist und wobei R ein linearer oder verzweigter, gesättigter oder ungesättigter Kohlenwasserstoffrest mit 4 bis 40 C-Atomen, bevorzugt 8 bis 22, besonders bevorzugt mit 10 bis 18 Kohlenstoffatomen ist, und wobei bevorzugte Alkylhalogenide ausgewählt sind aus 1-Chlorhexadecan, 1-Chloroctadecan, 2-Chlorhexadecan, 2-Chloroctadecan, 1-Bromhexadecan, 1-Bromoctadecan, 2-Bromhexadecan, 2-Bromoctadecan, 1-Iodhexadecan, 1-Iodoctadecan, 2-Iodhexadecan und/oder 2-Iodoctadecan, wobei Mischungen von zumindest zwei Alkylchloriden besonders bevorzugt sind.

**5.** Verwendung nach einem der Ansprüche 1 bis 4, **dadurch gekennzeichnet, dass** das Alkyl-Epoxid der allgemeinen Formel 1 entspricht:

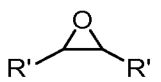

Formel 1

wobei R‘ unabhängig voneinander gleiche oder verschiedene einwertige aliphatische, gesättigte oder ungesättigte Kohlenwasserstoffreste mit 2 bis 38 C-Atomen, bevorzugt 6 bis 20, besonders bevorzugt mit 8 bis 18 Kohlenstoffatomen oder H sind, unter der Maßgabe das mindestens einer der Reste ein Kohlenwasserstoffrest ist, besonders bevorzugt sind hierbei Alkyl-Epoxide, bei denen genau einer der Reste ein Kohlenwasserstoffrest, insbesondere bevorzugt Epoxide, die sich von $C_6$ - $C_{24}$ alpha-Olefinen ableiten.

**6.** Verwendung nach einem der Ansprüche 1 bis 5, **dadurch gekennzeichnet, dass** die eingesetzten Polyolether solche umfassen, die ausgewählt sind aus der Gruppe der Sorbitan- und/oder Polyglycerinether, vorzugsweise Polyglycerinether, bevorzugt solche Polyglycerinether, welche der allgemeinen Formel 2 entsprechen:

$M_aD_bT_c$ Formel 2

wobei

M = $[C_3H_5(OR'')_2O_{1/2}]$
D = $[C_3H_5(OR'')_1O_{2/2}]$
T = $[C_3H_5O_{3/2}]$
a = 1 bis 10, bevorzugt 2 bis 3, insbesondere bevorzugt 2,
b = 0 bis 10, bevorzugt größer 0 bis 5, insbesondere bevorzugt 1 bis 4,
c= 0 bis 3, bevorzugt 0,
wobei die Reste R" unabhängig voneinander gleiche oder verschiedene einwertige aliphatische, gesättigte oder ungesättigte Kohlenwasserstoffreste mit 2 bis 38 C-Atomen, bevorzugt 6 bis 20, besonders bevorzugt mit 8 bis 18 Kohlenstoffatomen oder H sind, unter der Maßgabe, dass mindestens einer der Reste R" ein Kohlenwasserstoffrest ist,
und/oder der allgemeinen Formel 3 entsprechen:

$M_xD_yT_z$ Formel 3

wobei

M = 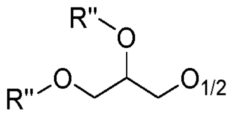

D = 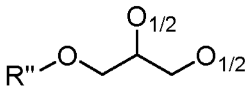 und/oder 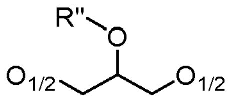

T = 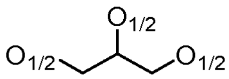

x = 1 bis 10, bevorzugt 2 bis 3, insbesondere bevorzugt 2,
y = 0 bis 10, bevorzugt größer 0 bis 5, insbesondere bevorzugt 1 bis 4,
z = 0 bis 3, bevorzugt größer 0 bis 2, insbesondere bevorzugt 0,
unter der Maßgabe, dass mindestens ein Rest R" ungleich Wasserstoff ist, weiterhin R" wie zuvor definiert, und/oder der allgemeinen Formel 4 entsprechen:

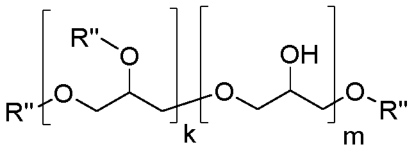

Formel 4

wobei

k = 1 bis 10, bevorzugt 2 bis 3, insbesondere bevorzugt 2,
m = 0 bis 10, bevorzugt größer 0 bis 5, insbesondere bevorzugt 1 bis 3,
unter der Maßgabe, dass mindestens ein Rest R" ungleich Wasserstoff ist, weiterhin R" wie zuvor definiert, und dass die Summe k + m größer null ist und die Fragmente mit den Indices k und m statistisch verteilt sind.

**7.** Verwendung nach Anspruch 6, **dadurch gekennzeichnet, dass** die Polyolether der Formel 2, 3 und/oder 4 phosphoryliert sind, insbesondere als Rest R" zumindest einen Rest $(R'''O)_2P(O)$-tragen, wobei die Reste R‴ unabhängig voneinander Kationen, vorzugsweise $Na^+$, $K^+$ oder $NH_4^+$, oder Ammoniumionen von Mono-, Di- und Trialkylaminen, wobei es sich auch um funktionalisierte Alkylreste wie beispielsweise bei Amidaminen handeln kann, von Mono-, Di- und Trialkanolaminen, von Mono-, Di- und Triaminoalkylaminen oder H oder R″″-O- sind, wobei R″″ ein einwertiger aliphatischer, gesättigter oder ungesättigter Kohlenwasserstoffrest mit 3 bis 39 C-Atomen, bevorzugt 7 bis 22, besonders bevorzugt mit 9 bis 18 Kohlenstoffatomen oder ein Polyolrest ist.

**8.** Verwendung nach einem der Ansprüche 1 bis 7, **dadurch gekennzeichnet, dass** die Polyolether in Abmischung mit mindestens einem ionischen, bevorzugt anionischen Co-Tensid als Additive in wässrigen Polymerdispersionen verwendet werden, wobei bevorzugte ionische Co-Tenside die Ammonium- und Alkali-Salze von Fettsäure, Alkylsulfate, Alkylethersulfate, Alkylsulfonate, Alkylbenzolsulfonate, Alkylphosphate, Alkyl-Sulfosuccinate, Alkyl-Sulfosuccinamate und Alkylsarcosinate sind, wobei insbesondere Alkylsulfate mit 12-20 Kohlenstoffatomen bevorzugt sind, weiter bevorzugt mit 14-18 Kohlenstoffatomen, noch mehr bevorzugt mit mehr als 16-18 Kohlenstoffatomen, mit der Maßgabe, dass der Anteil an ionischem Co-Tensid bezogen auf die Gesamtmenge Polyolether plus Co-Tensid vorzugsweise im Bereich von 0,1 - 50 Gew.-%, bevorzugt im Bereich von 0,2 - 40 Gew.-%, mehr bevorzugt im Bereich von 0,5 - 30 Gew.-%, noch mehr bevorzugt im Bereich von 1 - 25 Gew.-% liegt.

**9.** Verwendung nach einem der Ansprüche 1 bis 8, **dadurch gekennzeichnet, dass** die wässrigen Polymer-Dispersionen ausgewählt sind aus der Gruppe wässriger Polystyrol-Dispersionen, Polybutadien-Dispersionen, Poly(meth)acrylat-Disperionen, Polyvinylester-Dispersionen und Polyurethan-Dispersionen, insbesondere Polyurethan-Dispersionen, wobei der Festkörper-Anteil dieser Dispersionen bevorzugt im Bereich von 20 - 70 Gew.-% liegt, mehr bevorzugt im Bereich von 25 - 65 Gew.-%.

**10.** Verwendung nach einem der Ansprüche 1 bis 9, **dadurch gekennzeichnet, dass** die Einsatzkonzentration der Polyolether in der wässrigen Polymer-Dispersion im Bereich von 0,2 - 10 Gew.-%, besonders bevorzugt von 0,4 - 7,5 Gew.-%, insbesondere von 0,5 - 5 Gew.-% liegt, bezogen auf das Gesamtgewicht der Dispersion.

**11.** Verwendung nach einem der Ansprüche 1 bis 10, **dadurch gekennzeichnet, dass** die Polyolether als Schaumhilfsmittel bzw. Schaumstabilisatoren zum Aufschäumen der wässrigen Polymer-Dispersionen dienen sowie als Trocknungshilfsmittel, Verlaufsadditiv, Netz-Mittel und/oder Rheologieadditiv.

**12.** Verfahren zur Herstellung einer porösen Polymerbeschichtung, vorzugsweise porösen Polyurethanbeschichtung unter Einsatz von Polyolethern als Additive in wässrigen Polymer-Dispersionen umfassend die Schritte

a) Bereitstellen einer Mischung enthaltend eine wässrige Polymerdispersion, mindestens ein Polyolether gemäß einem der Ansprüche 1 bis 11, vorzugsweise umfassend Sorbitan- und/oder Polyglycerinether, sowie ggf. weitere Zusatzstoffe,
b) Aufschäumen der Mischung zu einem vorzugsweise homogenen, feinzelligen Schaum,
c) optional Zugabe mindestens eines Verdickers zur Einstellung der gewünschten Viskosität des Nasschaums,
d) Auftragen einer Beschichtung der geschäumten Polymer-Dispersion auf einen geeigneten Träger,
e) Trocknen der Beschichtung.

**13.** Poröse Polymerbeschichtung, vorzugsweise poröse Polyurethanbeschichtung, erhältlich durch den Einsatz von Polyolethern, vorzugsweise umfassend Sorbitan- und/oder Polyglycerinether, als Additive in wässrigen Polymer-Dispersionen bei der Herstellung solcher Polymerbeschichtungen, erhältlich durch ein Verfahren nach Anspruch 12, mit der Maßgabe, dass die poröse Polymerbeschichtung vorzugsweise eine mittlere Zellgröße kleiner 150 $\mu$m, bevorzugt kleiner 120 $\mu$m, insbesondere bevorzugt kleiner 100 $\mu$m, ganz besonders bevorzugt kleiner 75 $\mu$m aufweist, wobei die Zellgröße mittels des in der Beschreibung angegebenen Verfahrens bestimmt wird.

## Claims

**1.** Use of polyol ethers as additives in aqueous polymer dispersions for production of porous polymer coatings, wherein the polyol ethers are obtainable by the reaction of a polyol with at least one alkyl halide or alkylene halide, at least one primary or secondary alcohol or else at least one alkyl- or alkenyloxirane, thiirane or aziridine, or obtainable by the reaction of primary or secondary alcohols with glycidol, epichlorohydrin and/or glycerol carbonate, wherein the polyols are selected from the group of the $C_3$-$C_8$ polyols and oligomers thereof.

**2.** Use according to Claim 1, wherein the polyol ethers are obtainable by the reaction of a polyol with at least one alkyl halide.

**3.** Use according to Claim 1 or 2, wherein the polyols are propane-1,3-diol, propylene glycol, glycerol, trimethylolethane, trimethylolpropane, sorbitan, sorbitol, isosorbide, erythritol, threitol, pentaerythritol, arabitol, xylitol, ribitol, fucitol, mannitol, galactitol, iditol, inositol, volemitol and glucose, especially glycerol, and wherein preferred polyol oligomers are the oligomers of $C_3$-$C_8$ polyols having 1-20, preferably 2-10 and more preferably 2.5-8 repeat units, particular preference being given here to diglycerol, triglycerol, tetraglycerol, pentaglycerol, dierythritol, trierythritol, tetraerythritol, di(trimethylolpropane), tri(trimethylolpropane) and di- and oligosaccharides, especially sorbitan and oligo- and/or polyglycerols.

**4.** Use according to any of Claims 1 to 3, **characterized in that** the alkyl halide conforms to the general formula R-X where X is a halogen atom, preferably a chlorine atom, and where R is a linear or branched, saturated or unsaturated hydrocarbon radical having 4 to 40 carbon atoms, preferably 8 to 22 and more preferably 10 to 18 carbon atoms, and wherein preferred alkyl halides are selected from 1-chlorohexadecane, 1-chlorooctadecane, 2-chlorohexadecane, 2-chlorooctadecane, 1-bromohexadecane, 1-bromooctadecane, 2-bromohexadecane, 2-bromooctadecane, 1-iodohexadecane, 1-iodooctadecane, 2-iodohexadecane and/or 2-iodooctadecane, particular preference being given to mixtures of at least two alkyl chlorides.

**5.** Use according to any of Claims 1 to 4, **characterized in that** the alkyl epoxide conforms to the general formula 1:

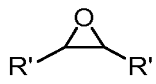

Formula 1

where R' are independently identical or different monovalent aliphatic saturated or unsaturated hydrocarbon radicals having 2 to 38 carbon atoms, preferably 6 to 20, more preferably having 8 to 18 carbon atoms, or H, with the proviso that at least one of the radicals is a hydrocarbon radical, particular preference here being given to alkyl epoxides in which exactly one of the radicals is a hydrocarbon radical, especially preferably epoxides that derive from $C_6$-$C_{24}$ alpha-olefins.

**6.** Use according to one of Claims 1 to 5, **characterized in that** the polyol ethers used include those that are selected from the group of the sorbitan ethers and/or polyglycerol ethers, preferably polyglycerol ethers, preferably those polyglycerol ethers which conform to the general formula 2:

$M_aD_bT_c$ Formula 2

where

$M = [C_3H_5(OR'')_2O_{1/2}]$
$D = [C_3H_5(OR'')_1O_{2/2}]$
$T = [C_3H_5O_{3/2}]$
a = 1 to 10, preferably 2 to 3, more preferably 2,
b = 0 to 10, preferably greater than 0 to 5, especially preferably 1 to 4,
c = 0 to 3, preferably 0,
where the R' ' radicals are independently identical or different monovalent aliphatic saturated or unsaturated hydrocarbon radicals having 2 to 38 carbon atoms, preferably 6 to 20, more preferably having 8 to 18 carbon atoms, or H, with the proviso that at least one of the R'' radicals is a hydrocarbon radical,
and/or conform to the general formula 3:

$M_xD_yT_z$ Formula 3

where

M = 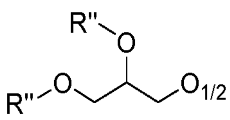

D = 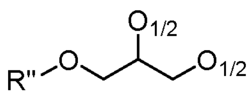

T = 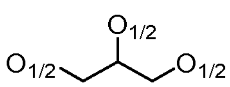 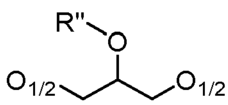

and/or

x = 1 to 10, preferably 2 to 3, especially preferably 2,
y = 0 to 10, preferably greater than 0 to 5, especially preferably 1 to 4,
z = 0 to 3, preferably greater than 0 to 2, especially preferably 0,
with the proviso that at least one R' ' radical is not hydrogen, still R'' as defined above,
and/or conform to the general formula 4:

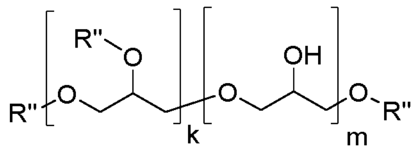

Formula 4

where

k = 1 to 10, preferably 2 to 3, especially preferably 2,
m = 0 to 10, preferably greater than 0 to 5, especially preferably 1 to 3,
with the proviso that at least one of the R" radicals is not hydrogen, still R'' as defined above, and that the sum total of k + m is greater than zero and the fragments having the indices k and m are distributed statistically.

**7.** Use according to Claim 6, **characterized in that** the polyol ethers of the formula 2, 3 and/or 4 have been phosphorylated, especially bear at least one $(R'''O)_2P(O)$- radical as the R" radical, where the R‴ radicals are independently cations, preferably $Na^+$, $K^+$ or $NH_4^+$, or ammonium ions of mono-, di- and trialkylamines, which may also be functionalized alkyl radicals as, for example, in the case of amide amines, of mono-, di- and trialkanolamines, of mono-, di- and triaminoalkylamines, or H or R''''-O-, where R'''' is a monovalent aliphatic saturated or unsaturated hydrocarbon radical having 3 to 39 carbon atoms, preferably 7 to 22, more preferably having 9 to 18 carbon atoms, or a polyol radical.

**8.** Use according to any of Claims 1 to 7, **characterized in that** the polyol ethers are used in a blend with at least one ionic, preferably anionic, co-surfactant as additives in aqueous polymer dispersions, preferred ionic co-surfactants being the ammonium and alkali metal salts of fatty acids, alkyl sulfates, alkyl ether sulfates, alkylsulfonates, alkylbenzenesulfonates, alkyl phosphates, alkyl sulfosuccinates, alkyl sulfosuccinamates and alkyl sarcosinates, preference being given especially to alkyl sulfates having 12-20 carbon atoms, further preferably having 14-18 carbon atoms, even more preferably having more than 16-18 carbon atoms, with the proviso that the proportion of ionic co-surfactant based on the total amount of polyol ether plus co-surfactant is preferably in the range of 0.1-50% by weight, preferably in the range of 0.2-40% by weight, more preferably in the range of 0.5-30% by weight, even more preferably in the range of 1-25% by weight.

**9.** Use according to any of Claims 1 to 8, **characterized in that** the aqueous polymer dispersions are selected from the group of aqueous polystyrene dispersions, polybutadiene dispersions, poly(meth)acrylate dispersions, polyvinyl ester dispersions and polyurethane dispersions, especially polyurethane dispersions, where the solids content of these dispersions is preferably in the range of 20-70% by weight, more preferably in the range of 25-65% by weight.

**10.** Use according to any of Claims 1 to 9, **characterized in that** the use concentration of the polyol ethers in the aqueous polymer dispersion is in the range of 0.2-10% by weight, more preferably of 0.4-7.5% by weight, especially of 0.5-5% by weight, based on the total weight of the dispersion.

**11.** Use according to any of Claims 1 to 10, **characterized in that** the polyol ethers serve as foaming aids or foam stabilizers for foaming of the aqueous polymer dispersions, and as a drying aid, levelling additive, wetting agent and/or rheology additive.

**12.** Process for producing a porous polymer coating, preferably porous polyurethane coating, using polyol ethers as additives in aqueous polymer dispersions, comprising the steps of

a) providing a mixture comprising an aqueous polymer dispersion, at least one polyol ether <u>according to any of Claims 1 to 11</u>, preferably comprising sorbitan ethers and/or polyglycerol ethers, and optionally further additives,
b) foaming the mixture to give a preferably homogeneous, fine-cell foam,
c) optionally adding at least one thickener to establish the desired viscosity of the wet foam,
d) applying a coating of the foamed polymer dispersion to a suitable carrier,
e) drying the coating.

**13.** Porous polymer coating, preferably porous polyurethane coating, obtainable by the use of polyol ethers, preferably comprising sorbitan ethers and/or polyglycerol ethers, as additives in aqueous polymer dispersions in the production

of such polymer coatings, obtainable by a process according to Claim 12, with the proviso that the porous polymer coating preferably has a mean cell size less than 150 μm, preferably less than 120 μm, especially preferably less than 100 μm, most preferably less than 75 μm, where cell size is determined by the method specified in the description.

**Revendications**

1. Utilisation de polyoléthers en tant qu'additifs dans des dispersions aqueuses polymères pour la préparation de revêtements poreux polymères, les polyoléthers pouvant être obtenus par la transformation d'un polyol avec au moins un halogénure d'alkyle ou d'alkylène, au moins un alcool primaire ou secondaire ou alors au moins un oxirane d'alkyle ou d'alcényle, un thiirane ou une aziridine, ou pouvant être obtenus par la transformation d'alcools primaires ou secondaires avec du glycidol, de l'épichlorhydrine et/ou du carbonate de glycérol, les polyols étant choisis dans le groupe des $C_3$-$C_8$-polyols et leurs oligomères.

2. Utilisation selon la revendication 1, les polyoléthers pouvant être obtenus par la transformation d'un polyol avec au moins un halogénure d'alkyle.

3. Utilisation selon la revendication 1 ou 2, les polyols étant le 1,3-propanediol, le propylèneglycol, le glycérol, le triméthyloléthane, le triméthylolpropane, le sorbitane, le sorbitol, l'isosorbide, l'érythritol, le thréitol, le pentaérythritol, l'arabitol, le xylitol, le ribitol, le fucitol, le mannitol, le galactitol, l'iditol, l'inositol, le volémitol ainsi que le glucose, en particulier le glycérol, les oligomères de polyol préférés étant les oligomères de $C_3$-$C_8$-polyols comprenant 1-20, de préférence 2-10, de manière particulièrement préférée 2,5-8 motifs récurrents, et le diglycérol, le triglycérol, le tétraglycérol, le pentaglycérol, le diérythritol, le triérythritol, le tétraérytritol, le di-(triméthylolpropane), le tri-(triméthylolpropane) ainsi que les disaccharides et les oligosaccharides étant particulièrement préférés, en particulier le sorbitane, les oligoglycérols et/ou les polyglycérols.

4. Utilisation selon l'une des revendications 1 à 3, **caractérisée en ce que** l'halogénure d'alkyle correspond à la formule générale R-X, dans laquelle X représente un atome d'halogène, de préférence un atome de chlore, et R représente un radical hydrocarboné linéaire ou ramifié, saturé ou insaturé, comprenant 4 à 40 atomes de carbone, de préférence 8 à 22, de manière particulièrement préférée 10 à 18 atomes de carbone et les halogénures d'alkyle préférés étant choisis parmi le 1-chlorohexadécane, le 1-chloro-octadécane, le 2-chlorohexadécane, le 2-chloro-octadécane, le 1-bromohexadécane, le 1-bromo-octadécane, le 2-bromohexadécane, le 2-bromo-octadécane, le 1-iodohexadécane, le 1-iodo-octadécane, le 2-iodohexadécane et/ou le 2-iodo-octadécane, les mélanges d'au moins deux chlorures d'alkyle étant particulièrement préférés.

5. Utilisation selon l'une des revendications 1 à 4, **caractérisée en ce que** l'époxyde d'alkyle correspond à la formule générale 1 :

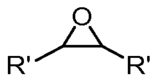

Formule 1

dans laquelle R' représente, indépendamment, des radicaux hydrocarbonés, identiques ou différents, monovalents, aliphatiques, saturés ou insaturés comprenant 2 à 38 atomes de carbone, de préférence 6 à 20 atomes de carbone de manière particulièrement préférée 8 à 18 atomes de carbone ou H, étant entendu qu'au moins l'un des radicaux représente un radical hydrocarboné, les époxydes d'alkyle dans lesquels exactement l'un des radicaux représente un radical hydrocarboné étant particulièrement préférés et les époxydes qui sont dérivés de $C_6$-$C_{24}$-alpha-oléfines étant en particulier préférés.

6. Utilisation selon l'une des revendications 1 à 5, **caractérisée en ce que** les polyoléthers utilisés comprennent ceux qui sont choisis dans le groupe des éthers de sorbitane et/ou de polyglycérol, préférablement les éthers de polyglycérol, de préférence les éthers de polyglycérol qui correspondent à la formule générale 2 :

$M_aD_bT_c$ Formule 2

dans laquelle

M = $[C_3H_5(OR'')_2O_{1/2}]$
D = $[C_3H_5(OR'')_1O_{2/2}]$
T = $[C_3H_5O_{3/2}]$
a = 1 à 10, de préférence 2 à 3, en particulier de préférence 2,
b = 0 à 10, de préférence supérieur à 0 jusqu'à 5, en particulier de préférence 1 à 4,
c= 0 à 3, de préférence 0,
les radicaux R" représentant, indépendamment les uns des autres, des radicaux hydrocarbonés, identiques ou différents, monovalents, aliphatiques, saturés ou insaturés comprenant 2 à 38 atomes de carbone, de préférence 6 à 20, de manière particulièrement préférée 8 à 18 atomes de carbone ou H, étant entendu qu'au moins l'un des radicaux R" représente un radical hydrocarboné, et/ou à la formule générale 3 :

$M_xD_yT_z$ Formule 3

dans laquelle

M = 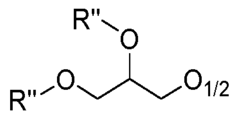

D = 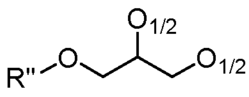

T = 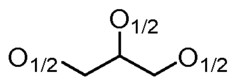 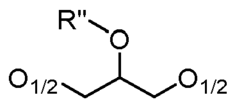

et/ou

x = 1 à 10, de préférence 2 à 3, en particulier de préférence 2,
y = 0 à 10, de préférence supérieur à 0 jusqu'à 5, en particulier de préférence 1 à 4,
z = 0 à 3, de préférence 0 à 2, en particulier de préférence 0,
étant entendu qu'au moins un radical R" est différent d'hydrogène, pour le reste R" est tel que défini ci-dessus,
et/ou à la formule générale 4 :

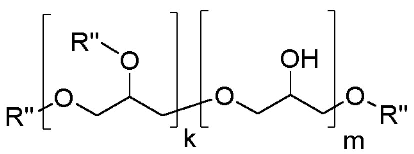

Formule 4

dans laquelle

k = 1 à 10, de préférence 2 à 3, en particulier de préférence 2,
m = 0 à 10, de préférence supérieur à 0 jusqu'à 5, en particulier de préférence 1 à 3,
étant entendu qu'au moins un radical R" est différent d'hydrogène, pour le reste R" est tel que défini ci-dessus, et que la somme k + m est supérieure à zéro et les fragments portant les indices k et m sont répartis statistiquement.

7. Utilisation selon la revendication 6, **caractérisée en ce que** les polyoléthers des formules 2, 3 et/ou 4 sont phosphorylés, portant en particulier comme radical R" au moins un radical $(R'''O)_2P(O)$, les radicaux R‴ étant indépendamment les uns des autres des cations, de préférence $Na^+$, $K^+$ ou $NH_4^+$, ou des ions d'ammonium de monoalkylamines, de dialkylamines et de trialkylamines, où il peut également s'agir de radicaux alkyle fonctionnalisés, comme par exemple d'amidoamines, de monoalcanolamines, de dialcanolamines et de trialcanolamines, de monoaminoalkylamines, de diaminoalkylamines et de triaminoalkylamines ou H ou R⁗-O-, où R⁗ représente un radical hydrocarboné monovalent, aliphatique, saturé ou insaturé comprenant 3 à 39 atomes de carbone, de préférence 7 à 22,

de manière particulièrement préférée 9 à 18 atomes de carbone ou un radical polyol.

**8.** Utilisation selon l'une des revendications 1 à 7, **caractérisée en ce que** les polyoléthers sont utilisés en mélange avec au moins un co-tensioactif ionique, de préférence anionique en tant qu'additifs dans des dispersions aqueuses polymères, des co-tensioactifs ioniques préférés étant les sels d'ammonium et de métal alcalin d'acide gras, d'alkylsulfates, d'alkyléthersulfates, d'alkylsulfonates, d'alkylbenzènesulfonates, d'alkylphosphates, d'alkylsulfosuccinates, d'alkylsulfosuccinamates et d'alkylsarcosinates, les alkylsulfates comprenant 12-20 atomes de carbone étant en particulier préférés, plus préférablement comprenant 14-18 atomes de carbone, encore plus préférablement plus de 16-18 atomes de carbone, étant entendu que la proportion de co-tensioactif, par rapport à la quantité totale de polyoléther et de co-tensioactif, se situe de préférence dans la plage de 0,1-50% en poids, de préférence dans la plage de 0,2-40% en poids, plus préférablement dans la plage de 0,5-30% en poids, encore plus préférablement dans la plage de 1-25% en poids.

**9.** Utilisation selon l'une des revendications 1 à 8, **caractérisée en ce que** les dispersions aqueuses polymères sont choisies dans le groupe des dispersions aqueuses de polystyrène, de polybutadiène, de poly(méth)acrylate, de poly(ester de vinyle) et de polyuréthane, en particulier les dispersions de polyuréthane, la proportion de corps solides de ces dispersions se situant de préférence dans la plage de 20-70% en poids, plus préférablement dans la plage de 25-65% en poids.

**10.** Utilisation selon l'une des revendications 1 à 9, **caractérisée en ce que** la concentration d'utilisation des polyoléthers dans la dispersion aqueuse polymère se situe dans la plage de 0,2-10% en poids, de manière particulièrement préférée de 0,4-7,5% en poids, en particulier de 0,5-5% en poids, par rapport au poids total de la dispersion.

**11.** Utilisation selon l'une des revendications 1 à 10, **caractérisée en ce que** les polyoléthers servent d'adjuvants de mousse ou, selon le cas, de stabilisants de mousse pour le moussage des dispersions aqueuses polymères, ainsi que comme adjuvant de dessiccation, additif d'étalement, agent mouillant et/ou additif de rhéologie.

**12.** Procédé de préparation d'un revêtement poreux polymère, de préférence d'un revêtement poreux de polyuréthane avec utilisation de polyoléthers comme additifs dans des dispersions aqueuses polymères, comprenant les étapes

a) mise à disposition d'un mélange contenant une dispersion aqueuse polymère, au moins un polyoléther selon l'une des revendications 1 à 11, comprenant de préférence un éther de sorbitane et/ou de polyglycérol, ainsi que le cas échéant d'autres additifs,
b) moussage du mélange en une mousse de préférence homogène, à fines cellules,
c) éventuellement ajout d'au moins un épaississant pour le réglage de la viscosité souhaitée de la mousse humide,
d) application d'un revêtement de la dispersion polymère moussée sur un support approprié,
e) séchage du revêtement.

**13.** Revêtement poreux polymère, de préférence revêtement poreux de polyuréthane, pouvant être obtenu par l'utilisation de polyoléthers, comprenant de préférence de l'éther de sorbitane et/ou de polyglycérol, comme additifs dans des dispersions aqueuses polymères lors de la fabrication de tels revêtements polymères, pouvant être obtenus par un procédé selon la revendication 12, étant entendu que le revêtement poreux polymère présente une dimension moyenne de cellule inférieure à 150 um, de préférence inférieure à 120 um, en particulier de préférence inférieure à 100 um, de manière tout particulièrement préférée inférieure à 75 um, la dimension de cellule étant déterminée au moyen du procédé indiqué dans la description.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 20150284902 A1
- US 20060079635 A1
- EP 16180041
- WO 2012082157 A2


### In der Beschreibung aufgeführte Nicht-Patentliteratur


- Acylation and Alkylation. **RÖMPP ; ULLMANN.** Encyclopedia of Industrial Chemistry
- **R. KAISER.** Quantitative Bestimmung organischer funktioneller Gruppen Methoden der Analyse in der Chemie. Akad. Verlagsgesellschaft, 1966
- **R. R. JAY.** *Anal. Chem.,* 1964, vol. 36 (3), 667-668
- Preparation and Industrial Applications of Phosphate Esters. Industrial Applications of Surfactants. Royal Society of chemistry, 1990, vol. II
- **WALTER FUNG.** Coated and laminated Textiles. CR-Press, 2002
- *CHEMICAL ABSTRACTS,* 7390-81-0